# EUROPEAN PATENT SPECIFICATION

(11) **EP 0 569 632 B1**
(45) Date of publication and mention of the grant of the patent: **14.08.1996**
(21) Application number: 92304273.3
(22) Date of filing: 12.05.1992
(51) Int. Cl.: C08J 11/20, C08J 11/06, C08L 21/00

(54) **Method of producing a thermoplastic resin from vulcanised rubber-containing compositions**
Verfahren zur Herstellung eines thermoplastischen Harzes aus vulkanisierte Gummi enthaltenden Zusammensetzungen
Procédé pour préparer une résine thermoplastique à partir d'une composition contenant du caoutchouc vulcanisé

(43) Date of publication of application: 18.11.1993
(73) Proprietor: BROWNE, H. Lee, Greenwich, CT 06830 (US)
(72) Inventor: Kuc, John, Lincoln University Pennsylvania 19352 (US)
(74) Representative: Harris, Ian Richard

(56) References cited:
- EP-A- 0 074 344
- WO-A-92/01745
- FR-A- 2 341 617
- US-A- 2 845 395
- US-A- 2 939 850
- US-A- 4 795 603

## Description

This invention relates to a process for producing thermoplastic resin products from vulcanised rubber-containing compositions, especially, but not exclusively, scrap or waste rubber.

Various methods are known in the art for reprocessing or reusing vulcanised rubber. However, in such prior art methods, the rubber particles are generally encapsulated in an encapsulating material rather than being subjected to a devulcanising process resulting in a substantially homogeneous product. Moreover, known prior art methods for the processing of scrap rubber particulates generally only allow a low output, e.g. an output in the range of from 154 to 440 kg/h. Yet again many such prior processes involve the use of expensive catalysts, which increases the overall cost of the recovery process.

Other prior art methods are also known which produce nonhomogeneous, discontinuous thermoplastic resins characterised by numerous voids, fissures and other discontinuities extending throughout the reprocessed product, such voids and fissures considerably restricting the utility of such products.

Amongst the prior art procedures for the utilisation or reclaiming scrap rubber mention may be made of US-A-4341667 and GB-A-1535896, the latter corresponding to FR-A-2341617.

In US-A-4341667 scrap rubber is reclaimed according to either of two methods. In one reclaimed rubber obtained by the microwave or other devulcanisation of rubber is blended with a semi-crystalline butene polymer or interpolymer to improve the "green" strength of the de-vulcanised rubber prior to revulcanisation. In the second, mouldable reclaimed rubber blends are obtained by blending the devulcanised scrap rubber with from 20 to 60 parts by weight of a crystalline or semi-crystalline polyolefin, preferably polyethylene or polypropylene or an ethylene/propylene copolymer, or a copolymer of ethylene or propylene with other α-olefins of 4 to 12 carbon atoms. Blending is effected by simple mixing of the devulcanised rubber scrap with the polyolefin at a temperature above the softening temperature of the polyolefin, in an internal mixer or extruder or in a rubber mill. The product is said to be a mouldable rubber blend, which in the uncured state, can readily be moulded into such things as gaskets, fuel lines and tank linings with excellent resistance to attack by organic solvents.

In accordance with the present invention an improved method has been devised for the reprocessing of vulcanised rubber products to form a substantially homogeneous thermoplastic resin product which can readily be moulded to form substantially uniform homogeneous and void free thermoplastic moulded product of many kinds.

In accordance with the invention there is provided a method of converting vulcanised or partially vulcanised rubber into a pelleted mouldable thermoplastic product useful as thermoplastic moulding resin, said method comprising:
a) comminuting the vulcanised or partially vulcanised rubber to form a particulate rubber crumb or obtaining such a particulate rubber crumb;
b) spraying or otherwise blending the particulate rubber crumb with from 3 to 10% by weight, based on the weight of the rubber crumb, of a heavy aromatic paraffin distillate solvent extract having a vapour density in the range 128-208 kg/m³ and a boiling point in the range of 260-538°C to provide said particles with a surface coating of said solvent extract;
c) passing the coated particles through a heated chamber;
d) softening the coated particles to provide a highly viscous, but still essentially particulate mass having a blackened surface by heating the coated particles in said chamber;
e) mixing the heat treated particles obtained in step d), with particles of a thermoplastic polymer;
f) masticating the particle mixture obtained in step e) at elevated temperature to a substantially homogeneous blend of said heat treated particles and said thermoplastic polymer particles;
g) extruding and chopping the heated blend obtained from step f) to form a pelleted thermoplastic product; and
h) cooling the pelleted product obtained from step g) to provide a substantially homogeneous mouldable thermoplastic resin product in pelleted form.

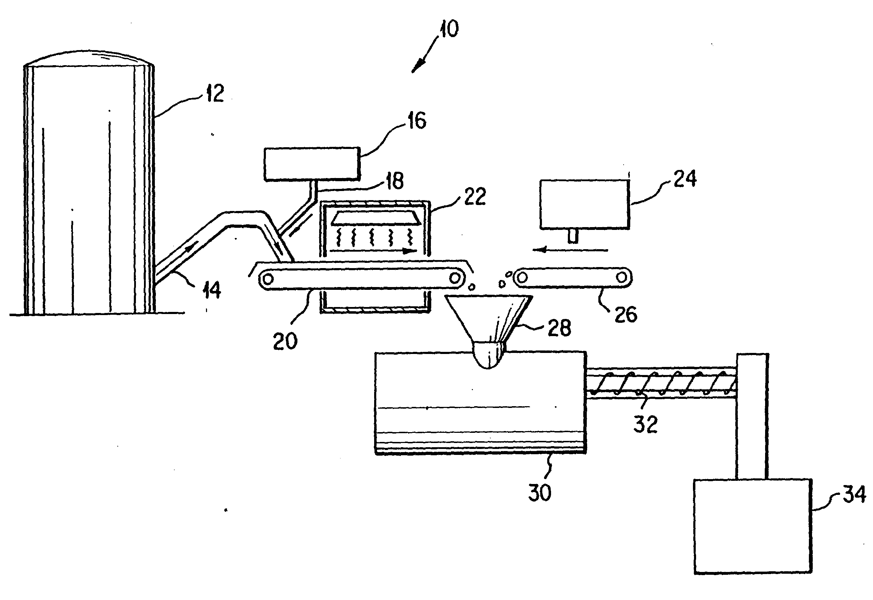

The above method will be further described with reference to the accompanying drawing in which the single figure is a block diagram of a preferred but exemplary method according to this invention.

Referring to the Figure, this shows a rubber and plastic product production system (10) for producing a useful thermoplastic product from a vulcanised or partially vulcanised rubber starting material. Most usually this will comprise granulated or particulated scrap rubber.

In the initial steps of the method the vulcanised or partially vulcanised rubber scrap, e.g. scrap vehicle tyres, is ground, pulverized or otherwise formed into particles of a suitable size for processing in accordance with the invention, such particles most conveniently having mesh sizes of 6.35 mm (0.25in) or less and which is generally referred to in the art as rubber crumb. Rubber crumb is, in fact, a commercially available material, which, depending on its origin, may or may not require an initial treatment to effect the removal of unwanted contaminants. For example, it may be necessary to pass the rubber crumb through a magnetic field to remove various metal contaminants, e.g. tyre cords that originally existed in the manufactured tyre, or other contaminants that may have gotten into the rubber crumb through other manufacturing processes or other external causes. Such decontamination processes are not shown in the Figure, and are not part of the invention.

Following any necessary decontamination, the rubber crumb is initially fed to a silo (12) which may simply be a closed housing having an outlet, or a hopper the exact construction of which is of no importance at all so far as the present invention is concerned save that it holds the rubber crumb and feeds the rubber crumb, preferably at a controlled rate for downstream processing.

From silo (12) the rubber crumb is fed through a conduit 14 onto a conveyor (20) together with a heavy aromatic paraffin distillate composition which is fed into the conduit (14) via the conduit (18) from the reservoir (16).

The heavy aromatic paraffinic distillate used for this purpose may be commercially purchased and may be, for example, the product manufactured and sold by Tyrplex Corporation of Kelton, Pennsylvania, under the Registered Trade Mark "TYRSOLVE" and which is a highly aromatic composition having a specific gravity of about 1.0, and an evaporation rate approximately 10³ time slower than that of ethyl ether. However, other heavy aromatic paraffinic distillate solvent extracts having vapour densities in the range 128-208kg/m³ and boiling points in the range 260-538°C are equally suitable. If desired the paraffinic distillate may be mixed with fly ash to aid in the devulcanisation process and also act as an inexpensive extender.

Rather than premixing the paraffinic distillate with the rubber crumb in the conduit (14), the distillate may be sprayed onto the rubber crumb on the conveyor (20). In either event, the distillate is preferably preheated in the distillate container (16) by any suitable heating procedure, such as, infrared heating, and preferably to a temperature of about 82°C, and so as to lower the viscosity of the paraffinic distillate about that of water, i.e. about 0.0007 Pa.s.

In either manner, the rubber crumb is provided on the conveyor (20) coated with the paraffinic distillate composition in an amount of from 3 to 10% by weight based on the weight of the rubber crumb applied or introduced onto the conveyor (20). This initial mixture of rubber crumb and paraffinic distillate extract then passes on the conveyor (20) into a heating chamber (22) heated by any appropriate heating means, for example, infrared tubes or by a microwave energy source. In the heating chamber (22) the mixture of particulate rubber crumb and paraffinic distillate is heated to a predetermined temperature, preferably in the range 104-121°C. At a flow rate in the range 8800 to 14300 kg/h, residence time within heating chamber (22) will be of the order of 3.0 minutes. Under these conditions it has been found that the passage of the initial mixture through heating chamber (22) causes the initial mixture to become highly viscous and gummy, with a blackened surface, but still in an essentially particulate form, in which the particles are soft to the touch. During this initial heating stage it is believed that a chemical reaction takes place probably involving a degree of devulcanisation of the rubber crumb.

At this stage in the method, the softened rubber crumb from the conveyor (20) is fed via a hopper (28) to a masticator (30) wherein it is masticated with particles of thermoplastic polymer material simultaneously fed to the masticator (30) from a feed container (24) via a second conveyor (26). The thermoplastic particulates used to this purpose will usually comprise chopped and comminuted scrap or waste thermoplastic material obtained from any suitable source, e.g. domestic or commercial.

In general, any thermoplastics material may be used, but most usually the thermoplastic material will be a polyolefinic material such as a polyethylene, polypropylene, polybutene, polyisoprene polymer or copolymer or a mixture of two or more thereof. Generally, for the purposes of this invention the thermoplastics material will be prechopped or precomminuted to a mesh size of 12.7 mm (0.5in) or less. The exact particle size is not critical except that it should be free-flowing and homogeneously mix with the intermediate rubber-containing product discharged from heating chamber (22) into the masticator (30).

In the masticator (30), the thermoplastic material and the intermediate rubber product are mixed together, preferably in the approximate proportions by weight of 30% thermoplastic material to 70% by weight of the intermediate reaction product obtained by heating the rubber crumb with the paraffin distillate in the heater (22).

Preferably the masticator (30) is a double arm masticator that continuously feeds the masticated product directly to screw feed (32) for subsequent pelletising, extrusion or calendering of the masticated product.

Temperature conditions in the masticator will depend on the melting point of the thermoplastic polymer, but will usually be in the range 176°C to 260°C more usually, for scrap thermoplastics material, 204°C to 216°C.

Using a continuous mixer extruder throughputs of about 14300 kg/h can be attained at a residence time of about 10-15 seconds.

From the masticator (30) the heated and masticated mixture passes through a discharge screw feed (32), e.g. standard single screw extruder, to a die having a series of small openings, which allows for hot die face cutting of the extruded product in a manner well known in the art.

From the hot face die the extruded and chopped or pelletised product is fed to a cooling chamber (34) wherein the final product is either convection cooled, or cooled in some other convenient manner. In this manner there is obtained a homogeneous pelletised mixture which may be used for injection moulding, extrusion, compression moulding, calendering and possibly blow moulding thereby to provide a variety of useful moulded articles from what are essentially two waste products, viz: scrap or waste rubber and scrap or waste thermoplastics polymers or resins.

In the final product it is believed that the devulcanised or partially devulcanised rubber composition is homogenized within the thermoplastic and when extruded or moulded forms a final product which is generally non-porous. This can then be used to useful moulded products such as rubbish bins, nursery containers, palettes, drain pipes, etc. and what can generally be described as non-critical mouldings.

## Claims

1. A method of converting vulcanised or partially vulcanised rubber into a pelleted mouldable thermoplastic product useful as thermoplastic moulding resin, said method comprising:
a) comminuting the vulcanised or partially vulcanised rubber to form a particulate rubber crumb or obtaining such a particulate rubber crumb;
b) spraying or otherwise blending the particulate rubber crumb with from 3 to 10% by weight, based on the weight of the rubber crumb, of a heavy aromatic paraffin distillate solvent extract having a vapour density in the range 128-208 kg/m³ and a boiling point in the range of 260-538°C to provide said particles with a surface coating of said solvent extract;
c) passing the coated particles through a heated chamber;
d) softening the coated particles to provide a highly viscous, but still essentially particulate mass having a blackened surface by heating the coated particles in said chamber ;
e) mixing the heat treated particles obtained in step d), with particles of a thermoplastic polymer;
f) masticating the particle mixture obtained in step e) at elevated temperature to a substantially homogeneous blend of said heat treated particles and said thermoplastic polymer particles;
g) extruding and chopping the heated blend obtained from step f) to form a pelleted thermoplastic product; and
h) cooling the pelleted product obtained from step g) to provide a substantially homogeneous mouldable thermoplastic resin product in pelleted form.

2. A method according to claim 1, wherein the vulcanised or partially vulcanised rubber and/or the thermoplastic polymer is or are waste or scrap materials.

3. A method according to claim 1 or 2, wherein the vulcanised or partially vulcanised rubber is or is comminuted to a rubber crumb having a particle size of 6.35 mm or less.

4. A method according to any one of claims 1 - 3, wherein the heavy aromatic paraffin distillate is heated prior to mixing with the rubber in step b).

5. A method according to any one of claims 1 - 6, wherein, in step d), the coated particles are heated to a temperature in the range 104°C to 121°C.

6. A method according to claim 5, wherein, in step d), the coated particles are maintained at that temperature for a period of the order of 3.0 minutes.

7. A method according to any one of claims 1 - 6, wherein the thermoplastic polymeric material added to the heated mixture in step e) is a polyolefin.

8. A method according to claim 7, wherein the thermoplastic polymeric material added to the heated mixture in step e) is a polyethylene, polypropylene, polybutene or polyisoprene polymer or copolymer, or a mixture of two or more thereof.

9. A method according to any one of claims 1 - 8, wherein the thermoplastic polymeric material added to the mixture in step e) has a particle size of 12.7 mm or less.

10. A method according to any one of claims 1 - 9, wherein, in step f) the mixture of rubber, heavy aromatic paraffin distillate and thermoplastic polymer is masticated at a temperature in the range 176°C to 260°C.

11. A method according to claim 10, wherein residence time of the mixture in the masticator is in the range 10 - 15 seconds.

12. A method according to any one of claim 1 - 11, wherein the amount of thermoplastic polymer added to the mixture in step e) is approximately 30% by weight based on the weight of the mixture of rubber and the heavy aromatic paraffin distillate fed to the masticator.

13. A method according to any of claim 1 - 12, wherein steps a) to h) are carried out on a continuous basis.

14. A method according to claim 13, wherein steps b) - d) are effected by spreading the rubber crumb onto the surface of a conveyor, conveying the rubber crumb on said conveyor through a heating chamber, discharging the heated rubber crumb from the conveyor, after passage through the heating chamber, into a masticator for mixing therein with the said particles of thermoplastic polymer, the heavy aromatic paraffin distillate being sprayed onto the rubber crumb on said conveyor prior to the entry thereof into the heating chamber.

15. A moulded article produced by moulding a pelleted product obtained by a method claimed in any one of claims 1 - 14.

## Patentansprüche

1. Verfahren zur Umwandlung von vulkanisiertem oder teilvulkanisiertem Gummi in ein als thermoplastisches Formharz brauchbares pelletisiertes formbares thermoplastisches Produkt, indem man
a) den vulkanisierten oder teilvulkanisierten Gummi unter Bildung von feinteiligen Gummikrümeln zerkleinert oder solche feinteiligen Gummikrümel erhält,
b) die feinteiligen Gummikrümel mit 3 bis 10 Gew.-%, bezogen auf das Gewicht der Gummikrümel, eines schweren aromatischen Paraffindestillatlösungsmittelextraktes mit einer Dampfdichte im Bereich von 128 bis 208 kg/m³ und einem Siedepunkt im Bereich von 260 bis 538 °C besprüht oder anderweitig vermischt, um die Teilchen mit einem Oberflächenüberzug des Lösungsmittelextraktes zu bekommen,
c) die überzogenen Teilchen durch eine erhitzte Kammer führt,
d) die überzogenen Teilchen erweicht, um eine hochviskose, aber noch im wesentlichen teilchenförmige Masse mit einer geschwärzten Oberfläche zu bekommen, indem man die überzogenen Teilchen in der Kammer erhitzt,
e) die in der Stufe d) erhaltenen mit Hitze behandelnden Teilchen mit Teilchen eines thermoplastischen Polymers vermischt,
f) das in der Stufe e) erhaltene Teilchengemisch bei erhöhter Temperatur zu einem im wesentlichen homogenen Gemisch der mit Hitze behandelnden Teilchen und der thermoplastischen Polymerteilchen knetet,
g) das aus der Stufe f) erhaltene erhitzte Gemisch unter Bildung eines pelletisierten thermoplastischen Produktes extrudiert und zerschneidet und
h) das aus der Stufe g) erhaltene pelletisierte Produkt kühlt, um ein im wesentlichen homogenes formbares thermoplastisches Harzprodukt in pelletisierter Form zu erhalten.

2. Verfahren nach Anspruch 1, bei dem das vulkanisierte oder teilvulkanisierte Gummi- und/oder das thermoplastische Polymer ein Ausschuß- oder Abfallmaterial ist.

3. Verfahren nach Anspruch 1 oder 2, bei dem der vulkanisierte oder teilvulkanisierte Gummi eine Gummikrume mit einer Teilchengröße von 6,35 mm oder weniger ist oder hierzu zerkleinert wird.

4. Verfahren nach einem der Ansprüche 1 bis 3, bei dem das schwere aromatische Paraffindestillat vor dem Vermischen mit dem Gummi in der Stufe b) erhitzt wird.

5. Verfahren nach einem der Ansprüche 1 bis 6, bei dem in der Stufe d) die überzogenen Teilchen auf eine Temperatur im Bereich von 104 °C bis 121 °C erhitzt werden.

6. Verfahren nach Anspruch 5, bei dem in der Stufe d) die überzogenen Teilchen auf jener Temperatur während einer Zeitdauer in der Größenordnung von 3,0 Minuten gehalten werden.

7. Verfahren nach einem der Ansprüche 1 bis 6, bei dem das thermoplastische Polymermaterial, das zu dem erhitzten Gemisch in der Stufe e) zugegeben wird, ein Polyolefin ist.

8. Verfahren nach Anspruch 7, bei dem das thermoplastische Polymermaterial, das zu dem erhitzten Gemisch in der Stufe e) zugegeben wird, ein Polyethylen, Polypropylen, Polybuten oder Polyisoprenpolymer oder -copolymer oder ein Gemisch zweier oder mehrerer derselben ist.

9. Verfahren nach einem der Ansprüche 1 bis 8, bei dem das thermoplastische Polymermaterial, das dem Gemisch in der Stufe e) zugegeben wird, eine Teilchengröße von 12,7 mm oder weniger hat.

10. Verfahren nach einem der Ansprüche 1 bis 9, bei dem in der Stufe f) das Gemisch von Gummi, schwerem aromatischem Paraffindestillat und thermoplastischem Polymer bei einer Temperatur im Bereich von 176 °C bis 260 °C geknetet wird.

11. Verfahren nach Anspruch 10, bei dem die Verweilzeit des Gemisches in dem Kneter im Bereich von 10 bis 15 Sekunden liegt.

12. Verfahren nach einem der Ansprüche 1 bis 11, bei dem die Menge an thermoplastischem Polymer, die dem Gemisch in der Stufe e) zugegeben wird, etwa 30 Gew.-%, bezogen auf das Gewicht des Gemisches von Gummi und der schweren aromatischen Paraffindestillatbeschickung zu dem Kneter, beträgt.

13. Verfahren nach einem der Ansprüche 1 bis 12, bei dem die Stufen a) bis h) in kontinuierlicher Weise durchgeführt werden.

14. Verfahren nach Anspruch 13, bei dem die Stufen b) bis d) durchgeführt werden, indem man die Gummikrümel auf der Oberfläche einer Fördereinrichtung ausbreitet, die Gummikrümel auf der Fördereinrichtung durch eine Heizkammer befördert, die erhitzten Gummikrümel von der Fördereinrichtung nach dem Durchgang durch die Heizkammer in einen Kneter zum Vermischen darin mit den Teilchen von thermoplastischem Polymer überführt, wobei das schwere aromatische Paraffindestillat auf die Gummikrümel auf der Fördereinrichtung vor deren Eintritt in die Heizkammer aufgesprüht wird.

15. Formling, hergestellt durch Formen eines nach einem Verfahren nach einem der Ansprüche 1 bis 14 hergestellten pelletisierten Produktes.

## Revendications

1. Procédé pour convertir du caoutchouc vulcanisé ou partiellement vulcanisé en un produit thermoplastique moulable granulaire utile comme résine de moulage thermoplastique, ledit procédé comprenant :
a) le broyage du caoutchouc vulcanisé ou partiellement vulcanisé pour former des fragments de caoutchouc particulaire ou l'obtention de tels fragments de caoutchouc particulaire ;
b) la pulvérisation sur les fragments de caoutchouc particulaire ou sinon leur mélange avec 3 à 10 % en poids, basé sur le poids des fragments de caoutchouc, d'un extrait lourd au solvant d'un distillat de paraffine aromatique ayant une densité de vapeur située dans l'intervalle de 128-208 kg/m³ et un point d'ébullition dans l'intervalle de 260-538°C pour fournir auxdites particules un revêtement de surface dudit extrait au solvant ;
c) le passage desdites particules revêtues à travers une chambre chauffée ;
d) le ramollissement des particules revêtues pour fournir une masse fortement visqueuse, mais toujours essentiellement particulaire, ayant une surface noircie en chauffant les particules revêtues dans ladite chambre ;
e) le mélange des particules traitées par la chaleur obtenues dans l'étape d) avec des particules d'un polymère thermoplastique ;
f) le triturage du mélange de particules obtenu à l'étape e) à température élevée pour former un mélange substantiellement homogène desdites particules traitées par la chaleur et desdites particules de polymère thermoplastique ;
g) l'extrusion et le découpage du mélange chauffé obtenu à l'étape f) pour former un produit thermoplastique granulaire ; et
h) le refroidissement du produit granulaire obtenu à l'étape g) pour fournir un produit en résine thermoplastique moulable substantiellement homogène sous forme granulaire.

2. Procédé selon la revendication 1, dans lequel le caoutchouc vulcanisé ou partiellement vulcanisé et/ou le polymère thermoplastique est ou sont des matériaux de récupération ou des déchets de matériaux.

3. Procédé selon la revendication 1 ou 2, dans lequel le caoutchouc vulcanisé ou partiellement vulcanisé est broyé pour former des fragments de caoutchouc ayant une taille de particule de 6,35 mm ou inférieure.

4. Procédé selon l'une quelconque des revendications 1 - 3, dans lequel le distillat lourd de paraffine aromatique est chauffé préalablement au mélange avec le caoutchouc dans l'étape b).

5. Procédé selon l'une quelconque des revendications 1 - 6, dans lequel, à l'étape d), les particules revêtues sont portées à une température située dans l'intervalle de 104°C à 121°C.

6. Procédé selon la revendication 5, dans lequel à l'étape d) les particules revêtues sont maintenues à cette température pendant une durée de l'ordre de 30 minutes.

7. Procédé selon l'une quelconque des revendications 1 - 6 dans lequel le matériau polymérique thermoplastique ajouté au mélange chauffé à l'étape e) est une polyoléfine.

8. Procédé selon la revendication 7, dans lequel le matériau polymèrique thermoplastique ajouté au mélange chauffé à l'étape e) est un polyéthylène, un polypropylène, un polybutène ou un polymère ou copolymère polyisoprène, ou un mélange de deux ou plus de ceux-ci.

9. Procédé selon l'une quelconque des revendications 1 - 8, dans lequel le matériau polymèrique thermoplastique ajouté au mélange à l'étape e) présente une taille de particule de 12,7 mm ou inférieure.

10. Procédé selon l'une quelconque des revendications 1 - 9 dans lequel à l'étape f) le mélange de caoutchouc, de distillat de paraffine aromatique et de polymère thermoplastique est trituré à une température située dans l'intervalle de 176°C à 260°C.

11. Procédé selon la revendication 10, dans lequel le temps de séjour du mélange dans le masticateur se situe dans l'intervalle de 10 - 15 secondes.

12. Procédé selon l'une quelconque des revendications 1 - 11, dans lequel la quantité de polymère thermoplastique ajouté au mélange à l'étape e) est d'approximativement 30% en poids basée sur le poids du mélange de caoutchouc et de distillat lourd de paraffine aromatique alimenté dans le masticateur.

13. Procédé selon l'une quelconque des revendications 1 - 12, dans lequel les étapes a) à h) sont menées sur une base continue.

14. Procédé selon la revendication 13, dans lequel les étapes b) - d) sont effectuées en étalant les fragments de caoutchouc sur la surface d'un convoyeur, en transportant les fragments de caoutchouc sur ledit convoyeur à travers une chambre de chauffe, en déchargeant les fragments de caoutchouc chauffés du convoyeur, après le passage par la chambre de chauffe, dans un masticateur pour un mélange dans celui-ci avec lesdites particules de polymère thermoplastique, le distillat lourd de paraffine aromatique étant pulvérisé sur les fragments de caoutchouc sur ledit convoyeur préalablement à l'entrée de celui-ci dans la chambre de chauffe.

15. Article moulé fabriqué par le moulage d'un produit granulaire obtenu par un procédé revendiqué selon l'une quelconque des revendications 1 - 14.
